# EUROPEAN PATENT APPLICATION

(11) **EP 4 830 939 A1**
(43) Date of publication of application: **28.10.2026**
(21) Application number: 24907599.5
(22) Date of filing: 27.02.2024
(51) Int. Cl.: B44B 3/06, B44B 3/02, B44F 9/04, B44C 5/06, B29C 67/24, C04B 14/06, C04B 14/22, C04B 26/18, C04B 111/80

(54) **DISCO PAD FOR MANUFACTURING VEIN PATTERN OF ARTIFICIAL MARBLE, METHOD FOR MANUFACTURING ARTIFICIAL MARBLE USING SAME, AND ARTIFICIAL MARBLE**

(30) Priority: 21.12.2023 KR 20230188612; 21.12.2023 KR 20230188631; 23.02.2024 KR 20240026416; 23.02.2024 KR 20240026454
(71) Applicant: LX Hausys, Ltd., Seoul 04637 (KR)
(72) Inventor: LEE, Sangnam, Seoul 07796 (KR); YUE, Sung Hoon, Seoul 07796 (KR); CHA, Kwangwon, Seoul 07796 (KR); HAN, Hyunjin, Seoul 07796 (KR); CHO, Hongkwan, Seoul 07796 (KR)
(74) Representative: Goddar, Heinz J.
(86) International application number: PCT/KR2024/002520
(87) International publication number: WO 2025/135304

(57) **Abstract**

The present invention relates to an artificial marble including a base portion and a pattern portion, wherein the pattern portion includes a vein in which at least three straight lines are sequentially connected, either directly or through a curve, and the vein includes two or more connection portions at which an angle formed by an point of contact at which two adjacent straight lines are directly connected and the two adjacent straight lines, or an angle formed by an point of contact of two extension lines obtained by extending two adjacent straight lines and the two straight lines, is an obtuse angle.

## Description

### [Technical Field]

This application claims priority to and the benefit of Korean Patent Application No. 10-2023-0188631 filed in the Korean Intellectual Property Office on December 21, 2023, Korean Patent Application No. 10-2023-0188612 filed in the Korean Intellectual Property Office on December 21, 2023, Korean Patent Application No. 10-2024-0026454 filed in the Korean Intellectual Property Office on February 23, 2024, and Korean Patent Application No. 10-2024-0026416 filed in the Korean Intellectual Property Office on February 23, 2024, the entire contents of which are incorporated herein by reference.

The present invention relates to a disco pat for manufacturing a vein pattern of artificial marble, a method for manufacturing an artificial marble using the same, and an artificial marble.

### [Background Art]

Engineered stone is artificial marble, also called E-stone, and is an interior design material that has a texture and feel similar to those of natural stone. Research has been conducted in the industry to enhance aesthetic quality of artificial marble by improving coloration and shape of the artificial marble. For example, Korean Patent No. 10-1270415 discloses an artificial marble in which marble chips are used to diversify patterns and appearance. Demand for engineered stone is gradually increasing for interior floors, wall decorations, and kitchen worktops, and most of the products imitate natural stone species such as granite and marble.

However, in the recent interior design market, interest in natural stones such as quartzite having more luxurious patterns has been increasing. Reflecting this trend, the E-stone industry is also making great efforts to implement the corresponding natural stones.

### [Detailed Description of the Invention]

### [Technical Problem]

The present invention has been made in an effort to provide a disco pat for manufacturing a vein pattern of artificial marble, a method for manufacturing an artificial marble using the same, and an artificial marble. More specifically, the present invention has been made in an effort to provide a disco pat for manufacturing a vein pattern of artificial marble capable of realizing various natural stone patterns, a method for manufacturing an artificial marble using the same, and an artificial marble.

In addition, the present invention has been made in an effort to provide an artificial marble having various natural stone patterns.

### [Technical Solution]

An exemplary embodiment of the present invention provides an artificial marble including a base portion and a pattern portion, wherein the pattern portion includes a vein in which at least three straight lines are sequentially connected, either directly or through a curve, and the vein includes two or more connection portions at which an angle formed by an point of contact at which two adjacent straight lines are directly connected and the two adjacent straight lines, or an angle formed by an point of contact of two extension lines obtained by extending two adjacent straight lines and the two straight lines, is an obtuse angle.

An exemplary embodiment of the present invention provides a disco pat for manufacturing a vein pattern of an artificial marble, the disco pat including: a rotating shaft configured to rotate in one direction; and a body portion including a plurality of first inclined surfaces and second inclined surfaces facing each other on opposite sides with respect to a line perpendicular to the rotating shaft, and a plurality of blade portions each defined as a line at which the first inclined surface and the second inclined surface meet, wherein an interior angle of adjacent ones of the blade portions is an obtuse angle.

An exemplary embodiment of the present invention provides a method for manufacturing an artificial marble, the method including: forming a base layer in a plate shape by distributing (dispensing) a base composition in a horizontally oriented mold; forming an engraved pattern on the base layer using the disco pat for manufacturing a vein pattern of an artificial marble described above; introducing a vein pattern composition into the engraved pattern; and forming an artificial marble having a vein pattern by performing a compression process and a heat treatment process.

### [Advantageous Effects]

According to an exemplary embodiment of the present invention, the blade portions of the disco pat for manufacturing a vein pattern of an artificial marble are irregularly formed, thereby enabling formation of a natural vein pattern.

In addition, veins of an artificial marble are provided in a non-linear and irregular manner, thereby enabling provision of an artificial marble having natural veins.

### [Brief Description of Drawings]

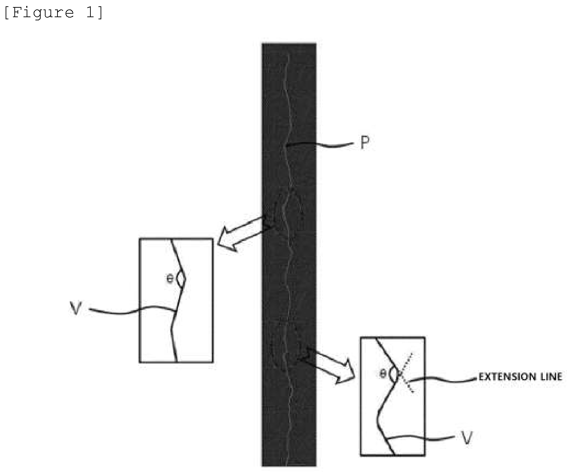

FIG. 1 is a view illustrating an artificial marble according to an exemplary embodiment of the present invention.

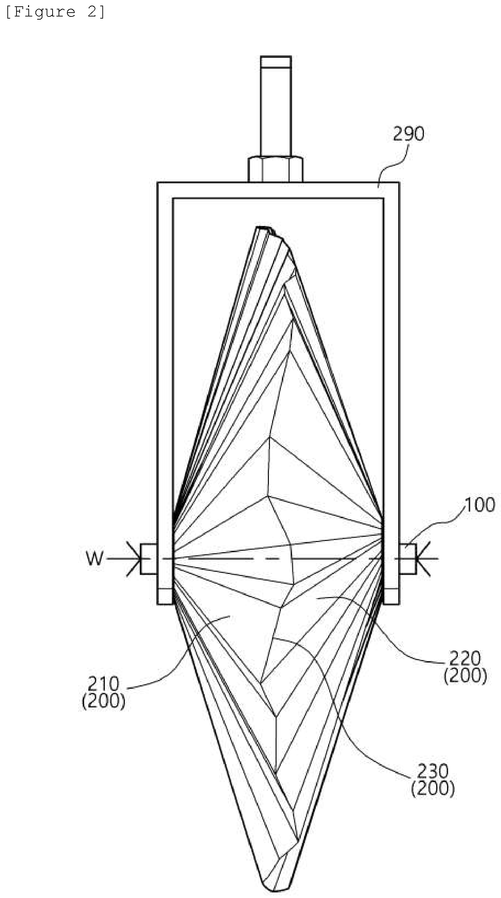

FIG. 2 is a front view schematically illustrating a disco pat for manufacturing a vein of an artificial marble according to an exemplary embodiment of the present invention.

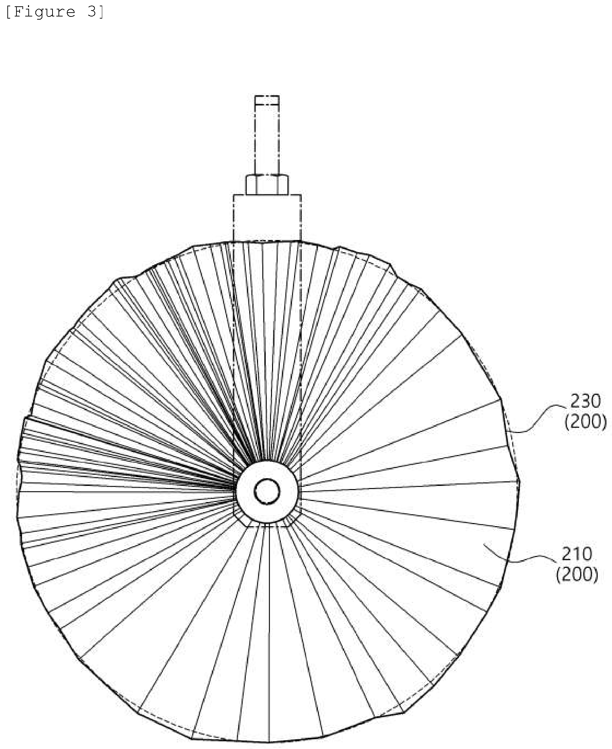

FIG. 3 is a side view schematically illustrating the disco pat for manufacturing a vein of an artificial marble according to an exemplary embodiment of the present invention.

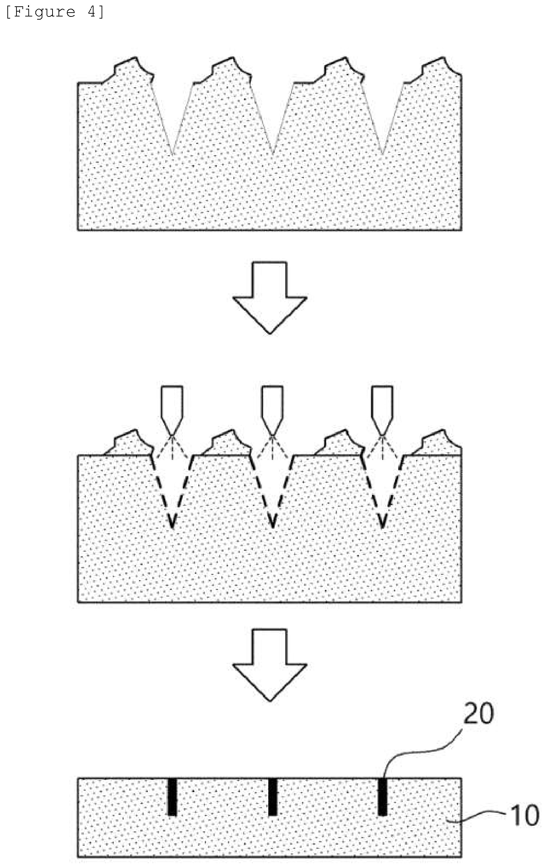

FIG. 4 is a view sequentially illustrating a method for manufacturing an artificial marble according to an exemplary embodiment of the present invention.
FIG. 5 is a photograph showing various forms of artificial marbles according to an exemplary embodiment.
FIG. 6(a) is a photograph showing an artificial marble of Comparative Example 1, FIG. 6(b) is a photograph showing an artificial marble of Comparative Example 2, and FIG. 6(c) is a photograph showing an artificial marble of Comparative Example 3.

### <Explanation of Reference Numerals and Symbols>

1: disco pat for manufacturing vein
100: rotating shaft
200: main body portion
210: first inclined surface
220: second inclined surface
230: blade portion
10: base portion
20: vein pattern
V: vein
P: pattern portion

### [Best Mode]

The detailed description of the present invention is intended to completely explain the present invention to one skilled in the art. Throughout the specification, unless explicitly described to the contrary, when one component "comprises (includes)" another component or "is characterized by" having a certain structure and a certain shape, this means that other components, structures, and shapes may be included without being excluded.

The present invention may be variously modified and may have various exemplary embodiments, and specific exemplary embodiments will be presented and described in detail in the following description. However, this is not intended to limit the scope of the invention to the exemplary embodiments, and it should be understood that all modifications, equivalents, or substitutes that fall within the spirit and technical scope of the present invention are encompassed thereby.

Hereinafter, the present invention will be described in detail with reference to the drawings. However, it should be noted that the drawings are provided for illustrating the present invention, and the scope of the present invention is not limited by the drawings.

An artificial marble according to an exemplary embodiment of the present invention includes a base portion and a pattern portion P, wherein the pattern portion P includes a vein V in which at least three straight lines are sequentially connected, either directly or through a curve, and the vein includes two or more connection portions at which an angle (θ) formed by an point of contact at which two adjacent straight lines are directly connected and the two adjacent straight lines, or an angle (θ) formed by an point of contact of two extension lines obtained by extending two adjacent straight lines and the two straight lines, is an obtuse angle.

Preferably, the obtuse angle (θ) may be from 130° to 178°. In this case, the obtuse angle refers to an interior angle between two adjacent straight lines or between extension lines.

According to an exemplary embodiment the present invention, the pattern portion satisfies the range of 130° to 178°, and thus the pattern portion is not formed as a monotonous straight line and does not deviate significantly from 180°, which corresponds to a straight line, thereby enabling implementation of a natural pattern design.

A total length of the pattern portion P may be from 8 mm to 600 mm, and a length of the straight line forming the vein may be from 2 mm to 30 mm. Preferably, the length of the straight line may be from 2 mm to 25.5 mm.

In addition, the vein (V) may include two or more connection portions within a length of 6 mm to 90 mm. Preferably, the vein (V) may include two or more connection portions within a length of 6 mm to 76.5 mm. Preferably, the vein (V) may include 2 to 15 connection portions within a length of 6 mm to 90 mm.

The pattern portion P may include one or more veins V. For example, when the pattern portion includes one vein and lengths of three straight lines constituting the vein are 8 mm, 2 mm, and 3 mm, two connection portions are included within a length of 13 mm of the vein. When the pattern portion includes two veins and lengths of six straight lines constituting the veins are 8 mm, 2 mm, 3 mm, 5 mm, 6 mm, and 6 mm, five connection portions are included within a length of 30 mm of the veins.

According to an exemplary embodiment of the present invention, when lengths of the straight lines constituting the vein fall within the above range, a problem in which straight lines in the pattern portion are not clearly distinguished due to short lengths of the straight lines constituting the vein can be prevented, and the pattern portion becoming monotonous due to long lengths of the straight lines constituting the vein can be prevented.

According to an exemplary embodiment of the present invention, when the number of connection portions in the vein falls within the above range, variations in angle in the vein increase, thereby preventing the pattern from being formed in a monotonous form and enabling implementation of a pattern similar to natural stone.

In the vein V, angles of one or both of adjacent connection portions among two or more connection portions may be different from each other. Preferably, in the vein V, angles of adjacent connection portions among two or more connection portions may be different from each other.

For example, when the vein includes two connection portions, angles of the two connection portions are different from each other. When the vein includes three connection portions, the three connection portions are, in order along a length direction of the vein, a first connection portion, a second connection portion, and a third connection portion. The three connection portions may all have different angles, or the second connection portion may have the same angle as that of the first connection portion or the third connection portion.

The vein and the pattern portion include various angles of connection portions, and adjacent connection portions are provided with different angles, and thus the pattern portion is not monotonous, and an artificial marble having an aesthetic appearance similar to natural stone when visually observed can be provided.

A length of the vein may be 5% to 30% greater than a length of a shortest line connecting both ends located in a length direction of the vein. Preferably, the length of the vein may be 10% to 25%, more preferably 10% to 20%, greater than the length of the shortest line.

When a difference between the length of the vein and the length of the shortest line falls within the above range, excessive bending of the vein can be prevented, thereby preventing formation of an unnatural pattern portion.

A vein according to an exemplary embodiment of the present invention may be a linear pattern, a curved pattern, or a combination thereof.

In this case, the linear pattern refers to a pattern in which the vein extends in a straight line from one end portion to the other end portion without discontinuity. In other words, the linear pattern may be in a form in which one or more straight lines are connected from one end portion of the vein to the other end portion without discontinuity. Accordingly, when a plurality of straight lines is connected, an angle may be formed.

In addition, whether the vein and the pattern portion are discontinuous can be determined based on a width of a straight line or a curve constituting the vein. In this case, a width of a straight line or a curve serving as a reference is 0.5 mm. In other words, when the width of the straight line or the curve is less than 0.5 mm, the vein is discontinuous, and when the width is 0.5 mm or more, the vein is connected without discontinuity.

The veins may intersect with each other. In an exemplary embodiment, a plurality of linear patterns may intersect with each other, a plurality of curved patterns may intersect with each other, or a linear pattern and a curved pattern may intersect with each other.

For example, when a plurality of linear patterns intersects with each other, they may be provided in shapes such as Y or X.

An artificial marble according to another exemplary embodiment includes a base region and a pattern region including a vein pattern. The vein pattern includes a bent portion bent at least once, and an interior angle of the bent portion may be an obtuse angle.

Specifically, the vein pattern includes a plurality of unit patterns, and each unit pattern may include a plurality of pattern portions. That is, the plurality of pattern portions may be connected to each other and provided continuously, and may be bent to form a bent portion. In other words, adjacent pattern portions that are in contact at one end may form an obtuse angle, and preferably may form an angle of 110° to 180°.

In addition, the vein pattern may include a plurality of bent portions, and the plurality of bent portions may include at least one different angle.

A length of the pattern portion may be from 3 mm to 120 mm. Preferably, a length of the unit pattern may be from 4 mm to 80 mm, more preferably from 4 mm to 40 mm.

A vein pattern according to an exemplary embodiment of the present invention may be a linear pattern, a curved pattern, or a combination thereof.

In this case, the linear pattern refers to a pattern in which the vein pattern extends in a straight line from one end portion to the other end portion without discontinuity. In other words, the linear pattern may be in a form in which one or more straight lines are connected from one end portion of the vein pattern to the other end portion without discontinuity. Accordingly, when a plurality of straight lines is connected, an angle may be formed.

In addition, the vein patterns may intersect with each other. In an exemplary embodiment, a plurality of linear patterns may intersect with each other, a plurality of curved patterns may intersect with each other, or a linear pattern and a curved pattern may intersect with each other.

A method for manufacturing an artificial marble according to exemplary embodiment of the present invention includes: a step of forming a base portion in a plate shape by distributing (dispensing) a base composition in a horizontally oriented mold; a step of forming an engraved pattern on the base portion using a disco pat for manufacturing a vein pattern of an artificial marble described below; a step of introducing a vein pattern composition into the engraved pattern; and a step of forming an artificial marble having a vein by performing a compression process and a heat treatment process.

A method for manufacturing an artificial marble according to an exemplary embodiment of the present invention includes a step of forming a base portion in a plate shape by distributing a base composition in a horizontally oriented mold.

The mold may be a container having a predetermined shape such that an artificial marble composition discharged from a hopper can be contained in a predetermined form. In particular, an exemplary embodiment of the present invention forms a base portion in a plate shape by orienting a mold horizontally, and is different from a process in which mixtures of natural quartz, an unsaturated polyester liquid resin, and a solid pigment are prepared as different types and vertically stacked as in the related art.

The base portion may be formed by injecting a base composition into a plurality of hoppers controlled by a digital distributor and then distributing the same in the mold.

The base composition may include a binder resin, inorganic particles, and quartz powder.

The binder resin is a resin including an unsaturated polyester (UPE) polymer and a vinyl-based monomer.

The binder resin may be manufactured by mixing and dispersing 0.4 to 2.5 parts by weight of a curing agent, 0.05 to 0.3 parts by weight of a catalyst, and 0.5 to 7 parts by weight of a coupling agent, based on 100 parts by weight of an unsaturated polyester resin, followed by curing.

The unsaturated polyester resin may be manufactured using a resin mixture including an unsaturated polyester polymer and a vinyl-based monomer. Preferably, the unsaturated polyester resin is manufactured using a composition including an unsaturated polyester polymer and a vinyl-based monomer in a weight ratio of 70:30 to 30:70. More preferably, the unsaturated polyester resin is manufactured using a composition including an unsaturated polyester polymer and a vinyl-based monomer in a weight ratio of 60:40 to 40:60.

Alternatively, the unsaturated polyester resin is manufactured using a composition including 40 wt% to 60 wt% of an unsaturated polyester polymer and 40 wt% to 60 wt% of a vinyl-based monomer.

The unsaturated polyester resin may typically be a viscous solution in which an unsaturated polyester polymer is diluted within the vinyl-based monomer. Therefore, when the content of the vinyl-based monomer falls within the above range, the viscosity can be reduced, thereby facilitating handling of the unsaturated polyester resin. Furthermore, the vinyl-based monomer can cure the unsaturated polyester resin from liquid to solid through cross-linking of polyester molecular chains without generating by-products. The weight average molecular weight of the unsaturated polyester resin is from 1,000 g/mol to 10,000 g/mol.

The unsaturated polyester polymer is not particularly limited, and examples thereof may include an unsaturated polyester polymer manufactured through a condensation reaction of a saturated or unsaturated dibasic acid and a polyhydric alcohol. Examples of the saturated or unsaturated dibasic acid include ortho-phthalic acid, isophthalic acid, maleic anhydride, citraconic acid, fumaric acid, itaconic acid, phthalic acid, phthalic anhydride, terephthalic acid, succinic acid, adipic acid, sebacic acid, or tetrahydrophthalic acid. In addition, examples of the polyhydric alcohol include ethylene glycol, diethylene glycol, triethylene glycol, propylene glycol, dipropylene glycol, tripropylene glycol, polypropylene glycol, 1,3-butylene glycol, hydrogenated bisphenol A, trimethylolpropane monoaryl ether, neopentyl glycol, 2,2,4-trimethyl-1,3-pentadiol, and/or glycerin. In addition, if necessary, a monobasic acid such as acrylic acid, propionic acid or benzoic acid, or a polybasic acid such as trimellitic acid or tetracarboxylic acid of benzene may be further used.

Examples of the vinyl-based monomer include an alkyl acrylate monomer or an aromatic vinyl-based monomer. However, it is preferable to use an aromatic vinyl-based monomer in consideration of reactivity with the unsaturated polyester polymer. For example, as the aromatic vinyl-based monomer, one or more selected from the group consisting of styrene, α-methylstyrene, p-methylstyrene, vinyltoluene, alkylstyrene substituted with an alkyl group having 1 to 3 carbon atoms, and halogen-substituted styrene may be used, and preferably, a styrene monomer may be used.

The curing agent may be included for a curing reaction of the binder, and is not particularly limited as long as a curing agent used in the manufacture of engineered stone is used. The curing agent may be an organic peroxide-based compound or an azo-based compound. The organic peroxide-based compound may be one or two or more selected from a tert-butyl peroxybenzoate thermal curing agent (TBPB, Trigonox C, Akzo Nobel), diacyl peroxide, hydroperoxide, ketone peroxide, peroxy ester, peroxy ketal, dialkyl peroxide, alkyl perester, percarbonate, and peroxydicarbonate. For example, a tert-butyl peroxybenzoate thermal curing agent, benzoyl peroxide, dicumyl peroxide, butyl hydroperoxide, cumyl hydroperoxide, methyl ethyl ketone peroxide, t-butyl peroxymaleate, t-butyl hydroperoxide, acetyl peroxide, lauroyl peroxide, t-butyl peroxyneodecanoate, or t-amyl peroxy 2-ethyl hexanoate may be used, but the present invention is not necessarily limited thereto.

In addition, the azo-based compound may be azobisisobutyronitrile, but is not necessarily limited thereto. The binder resin may contain 0.4 to 2.5 parts by weight of a curing agent based on 100 parts by weight of the unsaturated polyester resin. If the amount of the curing agent is less than the above range, curing of the binder is difficult, and if the amount is greater than the above range, discoloration of the binder may occur, and thus the curing agent may be included within the above range.

The catalyst may be included to promote curing of the binder at a low temperature, is not particularly limited as long as a catalyst used in the manufacture of engineered stone is used, and may be one or two or more selected from cobalt-based, vanadium-based, or manganese-based metal soaps, tertiary amines, quaternary ammonium salts, and mercaptans. For example, a cobalt 6% catalyst (Hex-Cem, Borchers) may be used. The binder resin may contain 0.05 to 0.3 parts by weight of the catalyst based on 100 parts by weight of the unsaturated polyester resin. If the amount of the catalyst is less than the above range, curing is not promoted, and if the amount is greater than the above range, discoloration of the binder may occur, and thus the catalyst may be included within the above range.

The coupling agent may be included to improve bonding strength between the binder and natural mineral particles, and may be a silane-based or silicate-based coupling agent. The binder resin may contain 0.5 to 7 parts by weight of the coupling agent based on 100 parts by weight of the unsaturated polyester resin. If the amount of the coupling agent is less than the above range, bonding strength with the natural mineral particles is reduced, and if the amount is greater than the above range, the raw material cost increases, and thus the coupling agent may be included within the above range.

The inorganic particles of the base composition of the present invention refer to inorganic particles having a particle size of 0.1 mm to 4.0 mm. The particle size may be measured using a particle size analyzer (Beckman Coulter LS 13 320 particle size analyzer).

The inorganic particles of the base composition of an exemplary embodiment of the present invention may be amorphous silica particles, glass particles, crystalline quartz particles, or the like. In addition, the inorganic particles of the base composition may be one or more selected from the group consisting of amorphous silica particles, glass particles, and crystalline quartz particles. The inorganic particles may be amorphous silica particles or crystalline quartz particles, and in this case, the inorganic particles may be inorganic particles having an SiO₂ content of 99.5 wt% to 100 wt%.

Preferably, the inorganic particles of the base composition of an exemplary embodiment of the present invention are amorphous silica particles, glass particles, and/or crystalline quartz particles having an SiO₂ content of 99.5 wt% to 100 wt%. An artificial marble manufactured using, as the inorganic particles of the base composition, amorphous silica particles or crystalline quartz particles having an SiO₂ content of 99.5 wt% to 100 wt% has a higher hardness than that of an artificial marble manufactured using glass particles containing barium (Ba) ions. In addition, an artificial marble manufactured using, as the inorganic particles of the base composition, amorphous silica particles or crystalline quartz particles having an SiO₂ content of 99.5 wt% to 100 wt% has a higher hardness than that of an artificial marble manufactured using glass particles containing barium (Ba) ions.

The inorganic particles of the base composition may be amorphous silica particles. The term "silica particle" is commonly used in the artificial marble field, and generally refers to an SiO₂-based inorganic particle having a high SiO₂ content of 90 wt% or more and containing a small amount of other components such as minerals in addition to SiO₂. The amorphous silica particles of the base composition of an exemplary embodiment of the present invention may be amorphous fused silica particles, and may also be referred to in the present specification as high-transparency amorphous fused silica particles. The amorphous fused silica particles may be amorphous fused silica particles having a particle size of 0.1 mm to 4.0 mm, and having an SiO₂ content of 99.5 wt% to 100 wt%, preferably 99.6 wt% to 100 wt%, and more preferably 99.7 wt% to 100 wt%, and an alumina content of 0.5 wt% or less, preferably 0.4 wt% or less, more preferably 0.3 wt% or less, and still more preferably 0.2 wt% or less. When the SiO₂ content of the amorphous silica particles is 99.5 wt% or more, preferably 99.6 wt% or more, and more preferably 99.7 wt% or more, transparency of the base portion of the artificial marble is improved.

The SiO₂ content of silica particles and quartz particles of an exemplary embodiment of the present invention may be confirmed by quantitatively analyzing the content with XRF (X-Ray Fluorescence spectrometer). In addition, crystalline and amorphous particles may be confirmed by XRD (X-ray diffraction), and generally may be confirmed by forming the particles into pellets and then measuring the pellets.

The inorganic particles of the base composition of an exemplary embodiment of the present invention may be crystalline quartz particles. The crystalline quartz particles of the base region of the present invention may also be referred to as highly transparent crystalline quartz particles in the present specification.

In this case, the crystalline quartz particles in the base region may be highly transparent crystalline quartz particles having a particle size of 0.1 mm to 4.0 mm, and having an SiO₂ content of 99.5 wt% to 100 wt%, preferably 99.6 wt% to 100 wt%, and more preferably 99.7 wt% to 100 wt%, and an alumina content of 0.5 wt% or less, preferably 0.4 wt% or less, more preferably 0.3 wt% or less, and still more preferably 0.2 wt% or less.

If the SiO₂ content of the crystalline quartz particles of the base composition is less than 99.5 wt%, for example, 99.4 wt% or less, transparency of the artificial marble decreases. Therefore, crystalline quartz particles having a SiO₂ content of 99.5 wt% or more are preferable.

In the present invention, quartz powder refers to quartz powder having a particle size of 0.1 mm or less. The particle size may be measured using a particle size analyzer (Beckman Coulter LS 13 320 particle size analyzer).

The quartz powder of the base composition of an exemplary embodiment of the present invention may also be referred to as highly transparent crystalline quartz powder in this specification.

The quartz powder of the base composition of an exemplary embodiment of the present invention is crystalline quartz powder, and preferably is crystalline quartz powder having a SiO₂ content of 99.5 wt% to 100 wt%. The quartz powder of the base composition may be quartz powder having an SiO₂ content of 99.5 wt% to 100 wt%, preferably 99.6 wt% to 100 wt%, and more preferably 99.7 wt% to 100 wt%, and an alumina content of 0.5 wt% or less, preferably 0.4 wt% or less, more preferably 0.3 wt% or less, and still more preferably 0.2 wt% or less.

It is preferable that the quartz powder of the base composition has an average SiO₂ content of 99.5 wt% to 100 wt% and an average alumina content of 0.5 wt% or less.

The SiO₂ content of the quartz powder of the base composition may be confirmed by quantitatively analyzing the content with XRF (X-Ray Fluorescence spectrometer). In this case, the content may generally be confirmed by forming the powders into pellets and measuring the pellets.

Since the quartz powder of the base composition has a small particle size, self-scattering occurs. Therefore, in order to increase the internal transmittance of the base portion of artificial marble, crystalline quartz powder having a SiO₂ content of 99.5 wt% or more may be used in the base composition of an exemplary embodiment of the present invention. If the SiO₂ content of the quartz powder is less than 99.5 wt%, since internal transmittance of the base region of the artificial marble is low, an artificial marble having relatively low transparency of the base portion can be manufactured.

The base composition may include 500 to 700 parts by weight of the inorganic particles and 200 to 400 parts by weight of the quartz powder, based on 100 parts by weight of the binder resin.

In addition, the base composition may include 500 to 700 parts by weight of the inorganic particles and 200 to 400 parts by weight of the quartz powder, based on 100 parts by weight of the binder resin, the binder resin including an unsaturated polyester polymer and a styrene monomer in a ratio of 70:30 to 30:70, and the quartz powder having a SiO₂ content of 99.5 wt% to 100 wt% and an alumina content of 0.5 wt% or less.

In an exemplary embodiment of the present invention, the step of forming a base portion in a plate shape by distributing a base composition in a horizontally oriented mold may further include a compaction process of the base portion. The compaction process is a step of primarily pressing the distributed base composition, and may serve to provide a uniform spacing so that the compound does not collapse or break during formation of an engraved pattern, which is a subsequent process. In particular, to form a vein having a thickness of 3 mm to 5 mm, it is preferable to perform the compaction process.

The method for manufacturing an artificial marble according to an exemplary embodiment of the present invention includes a step of forming an engraved pattern on the base portion. In the step of forming an engraved pattern on the base portion, a disco pat for manufacturing a vein pattern of an artificial marble according to an exemplary embodiment of the present invention is used.

Accordingly, the engraved pattern is formed in a zigzag shape, and an angle of a bent portion may be from 130° to 178°.

Specifically, in the engraved pattern, a plurality of auxiliary engraved portions are formed by one blade portion, and adjacent auxiliary engraved portions may be bent at an angle of 130° to 178°. A length of the auxiliary engraved portion may be from 2 mm to 30 mm. Preferably, the length of the auxiliary engraved portion may be from 2 mm to 25.5 mm.

For example, in a step of introducing a pattern composition described below, the pattern composition may be sprayed onto the engraved pattern. In this case, since a region onto which the pattern composition is sprayed is limited, when the length of the auxiliary engraved portion falls within the above range, the vein may appear continuously without any discontinuity in the middle.

In other words, if the length of the auxiliary engraved portion is less than the above range, the auxiliary engraved portion is short, and thus a vein does not appear on a surface of an artificial marble after a compression process and a heat treatment process.

In addition, if the length of the auxiliary engraved portion exceeds the above range, a region into which the pattern composition is not introduced is generated, and thus the vein may be formed in an intermittently discontinuous form.

The step of forming an engraved pattern may include a plurality of unit patterns, and the unit patterns may be formed to be spaced apart from each other, may be connected to each other, or may be formed such that unit patterns spaced apart from each other and unit patterns connected to each other are mixed.

A unit pattern may be a pattern that does not have a form repeated over a predetermined section. In an exemplary embodiment, the disco pat for manufacturing a vein of an artificial marble may have blade portions each having a different angle. Therefore, a pattern formed on the base portion during one rotation of the disco pat may be a unit pattern.

For example, when an average diameter of a body portion of the disco pat is 20 mm, a total length of blade portions may be from 125 mm to 126 mm, and in this case, a length of the unit pattern may be from 125 mm to 126 mm.

Alternatively, the length of the unit pattern may be from 3 mm to 120 mm. Preferably, the length of the unit pattern may be from 4 mm to 80 mm, more preferably from 4 mm to 40 mm.

A depth of the engraved pattern may be 80% or less or 75% or less and 50% or more of a thickness of the base portion.

If the depth of the engraved pattern exceeds 80% of the thickness of the base portion, the disco pat for manufacturing a vein may come into contact with a bottom portion during formation of the engraved pattern on the base portion, and an area of the vein may become excessively large, making complete drying of the vein difficult. In addition, if the depth of the engraved pattern is less than 50% of the thickness of the base portion, it is undesirable because the vein may be removed during subsequent processes such as bending or cutting down of the manufactured artificial marble.

The method for manufacturing an artificial marble according to an exemplary embodiment of the present invention includes a step of introducing a vein pattern composition into the engraved pattern.

The vein composition may include a binder resin and a pigment. The vein composition may further include inorganic particles, quartz powder, and a monomer. For example, the monomer may be a styrene monomer.

Since the descriptions of the inorganic particles and quartz powder of the base composition described above may be applied to the inorganic particles and quartz powder that may be further included in the vein composition, a detailed description thereof will be omitted.

The pigment is preferably an inorganic pigment. The pigment may be any pigment generally used in the manufacture of artificial marble and is not particularly limited. For example, TiO₂, NiO·Sb₂O₃·20TiO₂, Fe₂O₃, and Fe₃O₄ may be used.

In this case, in order to manufacture veins having various colors, a plurality of vein compositions to which pigments capable of representing respective colors are applied may be used.

Mixing of the vein composition may be performed by dry mixing or wet mixing used in a ceramic powder mixing process.

In an exemplary embodiment of the present invention, the step of introducing a vein composition into the engraved pattern may be performed by a discharge-type distributing process or a dispersion (spray) process of the vein composition. By such a process, veins of the artificial marble can be reproduced in various color forms, veins that are thin and clear while having one or two or more kinds of colors can be formed adjacent to each other, and patterns such as a natural flow pattern and a blurred pattern, having a gradation color, can also be reproduced. Accordingly, a vein according to an exemplary embodiment of the present invention may have two or more kinds of colors, a gradation color, or a combination thereof. In addition, a vein according to an exemplary embodiment of the present invention may include a linear pattern, a curved pattern, or a combination thereof.

In an exemplary embodiment of the present invention, the method includes, after the step of introducing a vein pattern composition into the engraved pattern, a step of forming an artificial marble having a vein by performing a compression process and a heat treatment process.

The compression process and the heat treatment process may be performed using methods known in the art. For example, the compression process may be performed at 20,000 tons or more based on the manufacture of a slab having a size of 3,000 mm × 1,400 mm, but is not limited thereto.

The heat treatment process may be performed over various temperature ranges depending on the type of binder resin, but is preferably performed at 90°C to 150°C. In addition, the heat treatment process may be performed over various time ranges depending on the type or size of the polymer resin, but is preferably performed for 20 minutes to 60 minutes.

After the compression process and the heat treatment process, a mold removal process, a post-processing process for cutting all sides of the artificial marble and then smoothly polishing the surface, and the like may be sequentially further included.

A disco pat 1 for manufacturing a vein of an artificial marble includes a rotating shaft 100 and a body portion 200. The body portion 200 includes a first inclined surface 210, a second inclined surface 220, and a blade portion 230.

The disco pat 1 according to an exemplary embodiment of the present invention refers to a configuration for forming an engraved pattern on a base portion, and may also be referred to as a knife, a blade, a tool, or the like.

The rotating shaft 100 is provided to rotate the body portion 200 and may be coupled to the body portion 200. In addition, the rotating shaft 100 may be coupled to a portion of the body portion 200 having a largest width. In this case, a width of the body portion 200 refers to a distance between end portions located at corresponding positions on both sides based on a cross section perpendicular to the rotating shaft 100.

The body portion 200 may be provided, on both sides with respect to a cross section perpendicular to the rotating shaft 100, with a plurality of first inclined surfaces 210 and second inclined surfaces 220, respectively. The first inclined surfaces 210 and the second inclined surfaces 220 may become farther apart from each other toward a center of the body portion 200 in the cross section perpendicular to the rotating shaft 100.

The first inclined surfaces 210 and the second inclined surfaces 220 may each have different lengths from those of adjacent first inclined surfaces 210 and adjacent second inclined surfaces 220, respectively. In this case, lengths of the first inclined surfaces 210 and the second inclined surfaces 220 refer to distances from the rotating shaft 100 to the blade portion 230.

In addition, the first inclined surface 210 and the second inclined surface 220 forming one blade portion 230 may have the same length or different lengths.

Accordingly, the blade portion 230 may form an obtuse angle with an adjacent blade portion 230. That is, when lengths of the first inclined surface 210 and the second inclined surface 220 are adjusted, an angle may be formed between two or three adjacent blade portions 230.

Preferably, two or three adjacent blade portions 230 may be provided at an angle of 130° to 178°, more preferably at an angle of 135° to 177°.

Among the angles between adjacent blade portions 230, at least one may be different from the others. In other words, since the body portion 200 includes one or more blade portions 230, a plurality of angles may be formed between adjacent blade portions 230. Among the angles between the plurality of blade portions 230, at least one may be different from the others.

For example, when lengths of the first inclined surface 210 and the second inclined surface 220 forming one blade portion 230 are the same and lengths of adjacent first inclined surfaces 210 are the same, the blade portion 230 forms an angle of 180°. When the angle of the blade portion 230 is 180°, the disco pat 1 can form a vein in a straight line form or in a zigzag form having a long period, and thus a problem arises in that the vein becomes monotonous.

In contrast, the disco pat 1 according to an exemplary embodiment of the present invention can form a vein in a zigzag form having a short period due to the angles of the blade portions 230, and thus a pattern design in which the vein is not uniform or monotonous and is irregular and characteristic can be implemented.

Furthermore, if the angle of the blade portion 230 is less than 130°, a mixture may remain on the blade portion 230, making a shape of the vein unclear.

A length of the blade portion 230 may be from 2 mm to 30 mm. Preferably, the length of the blade portion 230 may be from 2 mm to 25.5 mm.

A diameter of the body portion 200 may be from 20 mm to 80 mm. Preferably, the diameter of the body portion 200 may be from 60 mm to 80 mm. In this case, the diameter of the body portion 200 refers to a distance from the rotating shaft 100 to a circumference or an outer peripheral surface of the body portion 200. In other words, the diameter of the body portion 200 corresponds to a length of the first inclined surface 210 or the second inclined surface 220.

That is, since the lengths of adjacent first inclined surfaces 210 of the body portion 200 according to an exemplary embodiment of the present invention are different, the body portion 200 may include at least one diameter, and the above numerical range refers to an average diameter of the body portion 200.

The length of the unit pattern may increase or decrease depending on a diameter of the body portion 200. In this case, the unit pattern refers to a pattern that does not have a repeated form within a single pattern. In other words, when the body portion 200 makes one rotation, one unit pattern may be formed.

For example, when an average diameter of the body portion 200 is 20 mm, the length of the unit pattern may be 125 mm, and when the average diameter of the body portion 200 is 80 mm, the length of the unit pattern may be 502 mm. That is, as the average diameter of the body portion 200 increases, the unit pattern length may increase.

A width of the body portion 200 may be from 10 mm to 70 mm. Preferably, the width of the body portion 200 may be from 10 mm to 60 mm, more preferably from 20 mm to 60 mm.

When the width and diameter of the body portion 200 fall within the above ranges, an engraved pattern formed on the base portion by the body portion 200 has a width that is not narrow and a depth that is not shallow, and thus a vein may appear clearly after a compression process and a heat treatment process.

In other words, if the width and diameter of the body portion 200 are less than the above ranges, an engraved pattern has a width that is narrow or a depth that is shallow, and thus a problem may arise in which a vein does not appear after a compression process and a heat treatment process.

In addition, when the width and diameter of the body portion 200 exceed the above ranges, an engraved pattern has a width that is too wide or a depth that is deep, and thus, a pattern composition is not sprayed onto a portion of the engraved pattern, which is adjacent to a surface of the base portion, resulting in a problem in which a vein does not appear after a compression process and a heat treatment process.

The body portion 200 may include a low-friction material. The low-friction material may include, for example, any one of polytetrafluoroethylene (PTFE), polyamide, graphite, acetal, and ultra-high molecular weight polyethylene (UHMW-PE). Preferably, the body portion 200 may include ultra-high molecular weight polyethylene (UHMW-PE).

Since the body portion 200 includes a low-friction material, friction with the base portion is reduced, and thus a problem in which the base portion adheres to the body portion 200 during formation of an engraved pattern and a shape of the engraved pattern is not clearly formed may be prevented.

In addition, after formation of the engraved pattern, smooth cleaning is achieved in a process of cleaning the body portion 200, and thus, when the engraved pattern is formed using the disco pat 1 after cleaning, the engraved pattern can be reproducibly formed.

Furthermore, since the body portion 200 includes ultra-high molecular weight polyethylene, the disco pat 1 can be used multiple times due to excellent properties of the ultra-high molecular weight polyethylene such as impact resistance, chemical resistance, and mechanical properties.

Although the present invention has been described with reference to preferred exemplary embodiments, it will be understood by one skilled in the art that various modifications and variations can be made to the present invention without departing from the technical spirit and scope of the present invention.

### Example

An engraved pattern having a depth of 20 mm and a width of 10 mm was formed on a base portion using a disco pat in which angles of blade portions are from 135° to 177°, an average radius of a body portion is 80 mm, and lengths of individual blade portions are from 4 mm to 40 mm.

A vein composition was sprayed onto the engraved pattern, and an artificial marble was prepared by compression and heat treatment.

### Comparative Example 1

An artificial marble was prepared under the same conditions as in the Example, except that a disco pat including a body portion in which angles of blade portions are from 178° to 180° and lengths of individual blade portions are from 120 mm to 122 mm was used.

### Comparative Example 2

An artificial marble was prepared under the same conditions as in the Example, except that a disco pat including a body portion in which angles of blade portions are from 80° to 100° and lengths of individual blade portions are from 2 mm to 3 mm was used.

### Comparative Example 3

An artificial marble was prepared under the same conditions as in the Example, except that a disco pat in which an average radius of a body portion is less than 20 mm was used.

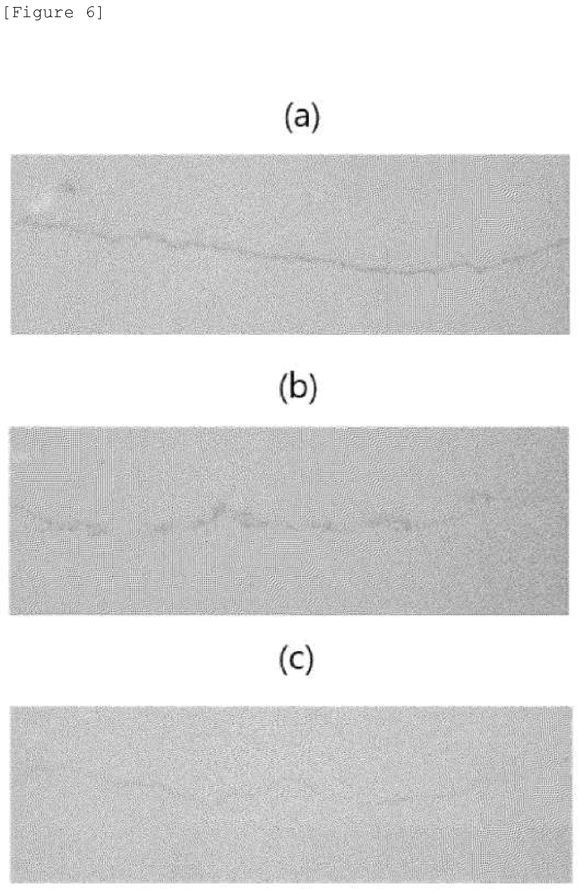

Referring to FIG. 6, in Comparative Example 1, since the angles between adjacent blade portions were large, the lengths of individual blade portions became long, and thus a vein was regularly reproduced in a long curved form, resulting in a problem in that the vein was not natural.

In Comparative Example 2, since the angles between adjacent blade portions were small, the base portion remained on the body portion at bent portions of the blade portions, and thus a problem occurred in which the vein became discontinuous in a middle portion.

In Comparative Example 3, since the average diameter of the body portion was small, the depth of the engraved pattern was shallow, resulting in a problem in that sharpness of the vein was reduced.

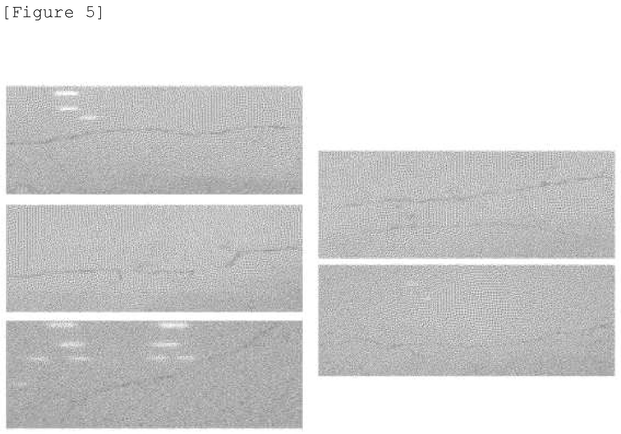

In contrast, referring to FIG. 5, the vein of the artificial marble according to the Example was sharp, continuous, and irregular, thereby reproducing a natural appearance similar to natural stone.

## Claims

1. An artificial marble comprising:
a base portion; and
a pattern portion, wherein
the pattern portion comprises a vein in which at least three straight lines are sequentially connected, either directly or through a curve, and
the vein comprises two or more connection portions at which an angle formed by an point of contact at which two adjacent straight lines are directly connected and the two adjacent straight lines, or an angle formed by an point of contact of two extension lines obtained by extending two adjacent straight lines and the two straight lines, is an obtuse angle.

2. The artificial marble of claim 1, wherein the obtuse angle is from 130° to 178°.

3. The artificial marble of claim 1, wherein the vein comprises two or more of the connection portions within a length of 6 mm to 90 mm.

4. The artificial marble of claim 3, wherein angles of adjacent connection portions among the two or more connection portions are different from each other.

5. The artificial marble of claim 1, wherein a length of the vein is 10% to 20% greater than a length of a shortest line connecting both ends located in a length direction of the vein.

6. A disco pat for manufacturing a vein pattern of an artificial marble, the disco pat comprising:
a rotating shaft configured to rotate in one direction; and
a body portion comprising a plurality of first inclined surfaces and second inclined surfaces facing each other on opposite sides with respect to a line perpendicular to the rotating shaft, and a plurality of blade portions each defined as a surface at which the first inclined surface and the second inclined surface meet,
wherein adjacent ones of the blade portions form an obtuse angle.

7. The disco pat of claim 6, wherein the adjacent blade portions form an angle of 110° to 180°.

8. The disco pat of claim 6, wherein the body portion has a diameter of 20 mm to 80 mm.

9. The disco pat of claim 6, wherein maximum widths of the first inclined surfaces and the second inclined surfaces are from 10 mm to 70 mm.

10. The disco pat of claim 6, wherein the first inclined surfaces and the second inclined surfaces each have different lengths from those of adjacent first inclined surfaces and adjacent second inclined surfaces, respectively.

11. The disco pat of claim 6, wherein the blade portion has a length of 3 mm to 120 mm.

12. A method for manufacturing an artificial marble, the method comprising:
forming a base layer in a plate shape by distributing a base composition in a horizontally oriented mold;
forming an engraved pattern on the base layer using the disco pat for manufacturing a vein pattern of an artificial marble of claim 6;
introducing a vein pattern composition into the engraved pattern; and
forming an artificial marble having a vein pattern by performing a compression process and a heat treatment process.

13. The method of claim 12, wherein a depth of the engraved pattern is 80% or less of a thickness of the base layer.

14. An artificial marble manufactured by the method of claim 12 comprising:
a base region; and
a pattern region comprising a vein pattern,
wherein the vein batten comprises a bent portion bent at least once, and the bent portion forms an obtuse angle.

15. The artificial marble of claim 12, wherein
the bent portion forms an angle of 110° to 180°,
the vein pattern comprises a plurality of bent portions, and
the plurality of bent portions comprises at least one different angle.
